# EUROPÄISCHE PATENTSCHRIFT

(11) **EP 2 701 947 B1**
(45) Veröffentlichungstag und Bekanntmachung des Hinweises auf die Patenterteilung: **17.10.2018**
(21) Anmeldenummer: 12716409.3
(22) Anmeldetag: 23.04.2012
(51) Int. Cl.: B60Q 1/10, G06K 9/00, G01M 11/06

(54) **VERFAHREN ZUR LEUCHTWEITENREGULIERUNG ZUMINDEST EINES SCHEINWERFERS EINES FAHRZEUGS UND LICHTSTEUERGERÄT**
METHOD FOR ADJUSTING THE BEAM WIDTH OF AT LEAST ONE HEADLIGHT OF A VEHICLE AND LIGHT CONTROL DEVICE
PROCÉDÉ POUR RÉGLER LA PORTÉE LUMINEUSE D'AU MOINS UN PHARE D'UN VÉHICULE ET APPAREIL DE COMMANDE D'ÉCLAIRAGE

(30) Priorität: 28.04.2011 DE 102011017697
(43) Veröffentlichungstag der Anmeldung: 05.03.2014
(73) Patentinhaber: Robert Bosch GmbH, 70442 Stuttgart (DE)
(72) Erfinder: EHLGEN, Tobias, 88212 Ravensburg (DE); NORDBRUCH, Stefan, 70806 Kornwestheim (DE); FOLTIN, Johannes, 75417 Muehlacker (DE)
(86) Internationale Anmeldenummer: PCT/EP2012/057340
(87) Internationale Veröffentlichungsnummer: WO 2012/146553

(56) Entgegenhaltungen:
- EP-A1- 0 867 336
- EP-A1- 2 128 590
- EP-A2- 0 949 118
- EP-A2- 1 964 717
- DE-A1- 4 341 409
- DE-A1-102008 011 699
- DE-A1-102008 031 159

## Beschreibung

### Stand der Technik

Die vorliegende Erfindung bezieht sich auf ein Verfahren zur Leuchtweitenregulierung zumindest eines Scheinwerfers eines Fahrzeugs, auf ein Lichtsteuergerät zur Leuchtweitenregulierung zumindest eines Scheinwerfers sowie auf ein entsprechendes Computerprogrammprodukt.

Zum Einstellen eines Nickwinkels eines Scheinwerfers an einem Fahrzeug ist es notwendig eine aktuelle Leuchtweite des Scheinwerfers zu kennen, um den Scheinwerfer entsprechend gesetzlicher Rahmenbedingungen auszurichten und somit eine Blendung anderer Verkehrsteilnehmer zu vermeiden.

Das Dokument DE 10 2010 029 149 beschreibt eine Plausibilisierung eines Leuchtweite-Testwerts eines Lichtkegels basierend auf einer Reflexionsintensität eines Punktes einer reflektierenden Fahrbahnmarkierung und einem aktuell erstellten Reflexionsintensitätsmodell für die Fahrbahnmarkierung.

Die Druckschrift Ep 0 949 118 A2 zeigt eine Einrichtung zur Einstellung der Richtung des von wenigstens einem Scheinwerfer ein es Fahrzeugs ausgesandten Lichtbündels.

Die Druckschrift EP 1 964 717 A2 zeigt ein Verfahren und eine Vorrichtung zum Steuern der Lichtabgabe eines Fahrzeugs abhängig vom Verlauf einer Fahrbahn.

Die Druckschrift DE 43 41 409 A1 zeigt eine Einrichtung zur Regelung einer Leuchtweite von Scheinwerfern von Kraftfahrzeugen.

Die Druckschrift DE 10 2008 011 699 A1 zeigt ein Verfahren zur Bestimmung einer Eigenschaft für den Betrieb eines Kraftfahrzeugs und entsprechend ausgestaltetes Kraftfahrzeug.

Die Druckschrift EP 0 867 336 A1 zeigt eine Vorrichtung zur Korrektur einer Orientierung eines Scheinwerfers eines automobilen Fahrzeugs.

Die Druckschrift DE 10 2008 031 159 A1 zeigt ein Verfahren zur Dejustageerkennung eines Fahrzeugscheinwerfers mit einer Kamera.

Die Druckschrift EP 2 128 590 A1 zeigt ein Verfahren und eine Vorrichtung zur Kalibirierung einer durch einen Frontscheinwerfer eines Fahrzeugs erzeugten horizontalen Hell-Dunkel-Grenze.

### Offenbarung der Erfindung

Vor diesem Hintergrund wird mit der vorliegenden Erfindung ein Verfahren zur Leuchtweitenregulierung zumindest eines Scheinwerfers eines Fahrzeugs, weiterhin ein Lichtsteuergerät zur Leuchtweitenregulierung zumindest eines Scheinwerfers eines Fahrzeugs sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass in vielen Fahrzeugen ein optisches Umfelderfassungssystem, wie eine Kamera, eine Stereo bzw. Top-View Kamera (Multi-Kamera-Systeme), verbaut ist, um Komfortsysteme und Sicherheitssysteme eines Fahrzeugs mit Informationen über ein Fahrzeugumfeld zu versorgen. Durch eine Nutzung der Informationen der Kamera für eine Leuchtweitenregulierung können Sensoren, die ausschließlich für die Leuchtweitenregulierung vorgesehen sind, eingespart werden. Dadurch ergeben sich ein erhebliches Kosteneinsparpotential und eine Schonung von kostbaren Ressourcen, wie beispielsweise Kupfer, da weniger elektrische Leitungen verbraucht werden. Weiterhin verbessert sich eine Verfügbarkeit der Leuchtweitenregulierung, da die Kamera in einem Scheibenwischer-Wischbereich angeordnet werden kann, und somit stets eine fehlerarme Umfelderkennung möglich ist. Ferner kann eine Alterung der Leuchtmittel in den Scheinwerfern durch eine schwächere Beleuchtung einer Projektionsfläche vor dem Fahrzeug erkannt werden.

Die vorliegende Erfindung schafft ein Verfahren zur Leuchtweitenregulierung zumindest eines Scheinwerfers eines Fahrzeugs, mit folgenden Schritten:
Einlesen eines Kamerabilds einer zumindest Kamera des Fahrzeugs, wobei das Kamerabild zumindest einen Teil eines Abbilds einer Projektionsfläche eines Lichtkegels des Scheinwerfers vor dem Fahrzeug umfasst;
Bestimmen zumindest einer Koordinate zumindest eines vordefinierten Helligkeitsübergangs und/oder einer vordefinierten Helligkeitsinhomogenität in dem Kamerabild;
Vergleichen der Koordinate mit einer Soll-Koordinate, um eine Differenz der Koordinate von der Soll-Koordinate zu erhalten, wobei die Soll-Koordinate eine Koordinate repräsentiert, an der der vordefinierte Helligkeitsübergang oder die vordefinierte Helligkeitsinhomogenität erwartet wird; und
Ansteuern des Scheinwerfers mit einem von der Differenz abhängigen Leuchtweitenänderungssignal, um die Leuchtweite zu ändern.

Weiterhin schafft die vorliegende Erfindung ein Lichtsteuergerät zur Leuchtweitenregulierung zumindest eines Scheinwerfers eines Fahrzeugs, mit folgenden Merkmalen:
eine Einrichtung zum Einlesen eines Kamerabilds zumindest einer Kamera des Fahrzeugs, wobei das Kamerabild zumindest einen Teil eines Abbilds einer Projektionsfläche eines Lichtkegels des Scheinwerfers vor dem Fahrzeug umfasst;
eine Einrichtung zum Bestimmen zumindest einer Koordinate zumindest eines vordefinierten Helligkeitsübergangs und/oder einer vordefinierten Helligkeitsinhomogenität in dem Kamerabild;
eine Einrichtung zum Vergleichen der Koordinate mit einer Soll-Koordinate, um eine Differenz der Koordinate von der Soll-Koordinate zu erhalten, wobei die Soll-Koordinate eine Koordinate repräsentiert, an der der vordefinierte Helligkeitsübergang oder die vordefinierte Helligkeitsinhomogenität erwartet wird; und
eine Einrichtung zum Ansteuern des Scheinwerfers mit einem von der Differenz abhängigen Leuchtweitenänderungssignal, um die Leuchtweite zu ändern.

Unter einem Scheinwerfer kann insbesondere ein Frontscheinwerfer eines Fahrzeugs verstanden werden. Eine Leuchtweitenregulierung kann eine Anpassung einer Leuchtweite eines Scheinwerfers an vorherrschende Rahmenbedingungen sein. Rahmenbedingungen können beispielsweise ein Beladungszustand des Fahrzeugs, eine Nickbewegung des Fahrzeugs aufgrund einwirkender Kräfte oder ein Abstand eines anderen Fahrzeugs zum Fahrzeug sein. Beispielsweise kann eine Leuchtweitenregulierung durch ein Ändern eines Neigungswinkels bzw. Nickwinkels oder Gierwinkels des Scheinwerfers oder durch eine Änderung einer Abstrahlcharakteristik vollzogen werden. Dazu kann der Scheinwerfer zumindest einen Aktuator aufweisen, der zumindest ein formgebendes Element zum Formen eines Lichtkegels des Scheinwerfers bewegt, um den Neigungswinkel oder den Nickwinkel des Scheinwerfers im Fahrzeug zu ändern. Ein Kamerabild kann visuelle Informationen aus einem Erfassungsbereich einer Kamera repräsentieren. Die Informationen können beispielsweise in einer Matrix aus Bildpunkten abgebildet sein. Ein Bildpunkt kann zumindest einen Helligkeitswert aufweisen. Die Kamera oder das Kamerasystem kann fest an dem Fahrzeug angeordnet sein und der Erfassungsbereich kann zumindest einen Teil eines Fahrersichtfelds des Fahrzeugs umfassen. Eine Projektionsfläche kann eine von Licht aus dem Scheinwerfer erhellte Fläche sein. Ein Lichtkegel kann ein sich erweiternder Lichtstrahl des Scheinwerfers ausgehend von einer Lichtquelle des Scheinwerfers sein. Durch konzentrierende und streuende Elemente des Scheinwerfers kann das Licht aus dem Scheinwerfer innerhalb der Projektionsfläche eine lichtkegelcharakteristische vordefinierte Helligkeitsverteilung aufweisen. Unter einer vordefinierten Helligkeitsverteilung kann eine Form oder ein Umriss oder ein Beleuchtungsintensitätsverlauf der Projektionsfläche verstanden werden, der vorab bekannt ist. Dadurch können innerhalb der Projektionsfläche hellere und dunklere Bereiche projiziert werden. Zwischen diesen Bereichen können lichtkegelcharakteristische vordefinierte Helligkeitsübergänge angeordnet sein oder in diesen Bereichen auftreten. Unter einen vordefinierten Helligkeitsübergang kann ein Helligkeitsunterschied zwischen benachbarten Bildpunkten des Kamerabilds verstanden werden, der größer als eine vordefinierte Schwelle ist. Unter einer Koordinate kann beispielsweise eine Zeilennummer und eine Spaltennummer eines Bildpunkts des Punktmusters des Kamerabilds verstanden werden. Eine Soll-Koordinate kann eine der Koordinate zugeordnete vorher bestimmte Koordinate sein, an der der Helligkeitsübergang erwartungsgemäß auftreten sollte. Eine Differenz oder Abweichung kann beispielsweise eine Anzahl von Zeilen und/oder Spalten zwischen der Koordinate und der Soll-Koordinate sein. Die Differenz oder Abweichung kann ein Vektor sein. Ein Leuchtweitenänderungssignal kann geeignet sein, beispielsweise den Aktuator im Scheinwerfer zu einer Bewegung zu veranlassen, um die Leuchtweite des Scheinwerfers zu verändern. Dabei kann beispielsweise eine positive oder negative Richtung der Differenz ein positives oder negatives Leuchtweitenänderungssignal entsprechend der positiven oder negativen Richtung der Differenz beeinflussen.

Unter einem Lichtsteuergerät kann vorliegend ein elektrisches Gerät verstanden werden, das Sensorsignale verarbeitet und in Abhängigkeit davon Steuersignale ausgibt. Das Lichtsteuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Lichtsteuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Erfindungsgemäß wird vor dem Schritt des Einlesens ein Schritt des Initialisierens des Scheinwerfers ausgeführt, wobei der Scheinwerfer im Schritt des Initialisierens mit einem Initialisierungssignal angesteuert wird, um die Projektionsfläche zu ändern, insbesondere zu verkleinern. Durch ein solches Initialisieren des Scheinwerfers kann besonders einfach ein lichtkegelcharakteristischer vordefinierter Helligkeitsübergang und/oder eine lichtkegelcharakteristische vordefinierte Helligkeitsverteilung oder Helligkeitsinhomogenität bestimmt werden, da die Projektionsfläche des Scheinwerferkegels während der Initialisierung klein ist, und hellere und dunklere Bereiche in der Projektionsfläche besser erkennbar sind. Ein Initialisierungssignal kann den Scheinwerfer in Richtung einer Fahrbahn vor dem Fahrzeug schwenken lassen, um einen Strahl des Scheinwerfers steiler auf die Fahrbahn treffen zu lassen. Eine Initialisierungskoordinate kann vorherbestimmt sein und einen erwarteten Ort eines vordefinierten Helligkeitsübergangs in der kleinen Projektionsfläche repräsentieren.

Im Schritt des Bestimmens kann ferner zumindest ein Teil eines Umrisses der Projektionsfläche bestimmt werden und im Schritt des Vergleichens ferner der Umriss mit einem Soll-Umriss verglichen werden, um die Differenz zu erhalten. Unter einem Umriss kann eine Hell-Dunkel-Grenze der Projektionsfläche verstanden werden. Der Umriss kann eine, für den Scheinwerfer charakteristische Form aufweisen. Da der Umriss der Projektionsfläche besonders einfach erkennbar ist, kann der Umriss vorteilhafterweise mit einem vorher bestimmten Soll-Umriss verglichen werden, um eine schnelle Bestimmung zu ermöglichen. So kann die Leuchtweite schnell angepasst werden.

Entsprechend einer weiteren Ausführungsform der vorliegenden Erfindung umfasst das Verfahren weiterhin einen Schritt des Ermittelns einer Reflektivität einer Fahrbahn vor dem Fahrzeug aus der Bildinformation, wobei im Schritt des Bestimmens die Koordinate unter Verwendung der Reflektivität bestimmt wird. Unter einer Reflektivität kann eine Fähigkeit der Fahrbahn verstanden werden, ein Lichtsignal zurückzuwerfen. Insbesondere kann die Reflektivität ein Verhältnis von zurückgeworfenem Licht zu einfallendem Licht repräsentieren. Die Reflektivität kann eine Wahrnehmbarkeit der Helligkeitsverteilung beeinflussen. Durch eine Einbeziehung der Reflektivität zur Bestimmung der Koordinate kann die Koordinate besser und sicherer erkannt werden.

Entsprechend einer weiteren Ausführungsform der vorliegenden Erfindung kann im Schritt des Bestimmens ein Höhenverlauf einer Straße durch ein Befahren der Straße mit dem Fahrzeug bestimmt werden und im Schritt des Vergleichens die Abweichung unter Berücksichtigung des Höhenverlaufs bestimmt werden. Unter einem Höhenverlauf einer Straße kann eine Kontur oder geodätische Höhe der Straße entlang eines Straßenverlaufs verstanden werden. Der Höhenverlauf kann auch durch eine Auswertung kameraunabhängiger Sensoren, die ebenfalls standardmäßig im Fahrzeug vorhanden sind, gewonnen werden. Dazu kann das Fahrzeug über eine vorbestimmte Strecke den Höhenverlauf der Straße aufzeichnen, und mit einem an einem Anfang der vorbestimmten Strecke aufgenommenen und gespeicherten Kamerabild kombinieren. Durch das Auswerten des aufgenommenen Bildes mit Kenntnis des tatsächlichen Höhenverlaufs der Straße können Informationen über die Projektionsfläche auf der vorbestimmten Strecke gewonnen werden, um eine Leuchtweite des Scheinwerfers zu regulieren.
Eine Oberflächenschätzung durch die Kamera wird immer ungenauer, je weiter entfernt Messpunkte auf der Oberfläche sind, die geschätzt werden. Durch eine begrenzte Vorausschau der Oberflächenschätzung der Kamera ist es vorteilhaft, wenn mehrere Messwerte an unterschiedlichen Stellen im Kamerabild während einer Vorbeifahrt gemessen und miteinander kombiniert/ verrechnet werden. Somit ist es auch mit dem vorausschauenden Sensor möglich eine genaue Vermessung der Oberfläche durchzuführen.
Durch Auswertung eines Nickwinkels, der auch aus dem Kamerabild geschätzt werden kann, ist es möglich beim Abfahren einer Strecke auf den Höhenverlauf zu schließen.

Je mehr Kameras zur Oberflächenberechnung eingesetzt werden, desto genauer wird das Ergebnis. Bei einem Stereo-Kamerasystem kann direkt aus den beiden Bildern die Entfernung eines beliebigen Punktes (dreidimensionale Messung wie beim menschlichen Gesichtssinn) und damit die Oberfläche berechnet werden.

Ebenso kann beispielsweise durch eine rückwärts blickende Kamera eines Einparksystems das Messergebnis einer vorwärts blickenden Kamera beim Vorbeifahren nochmals geprüft werden.

Ferner kann gemäß einer weiteren Ausführungsform im Schritt des Bestimmens ansprechend auf ein Erkennen einer Bodenunebenheit vor dem Fahrzeug ein Unebenheitsverlauf vor dem Fahrzeug geschätzt werden, und im Schritt des Vergleichens die Soll-Koordinate entsprechend dem Unebenheitsverlauf angepasst werden. Eine Bodenunebenheit kann eine Erhebung, wie eine Kuppe oder eine Vertiefung, wie eine Senke sein. Das Erkennen der Bodenunebenheit kann mit der zumindest einen Kamera, aber auch über andere Sensoren wie einem Navigationsgerät mit Kartenmaterial erfolgen. Daraus kann ein Unebenheitsverlauf bestimmt werden, der eine zu erwartende Lichtverteilung und die zu erwartende Projektionsfläche des Lichtstrahls beeinflusst. Entsprechend der zu erwartenden Projektionsfläche kann die Soll-Koordinate an einem anderen Ort erwartet werden. Durch eine Schätzung des Unebenheitsverlaufs kann eine Leuchtweitenregulierung mit einer Kamera durchgeführt werden, auch wenn die Projektionsfläche vor dem Fahrzeug nicht parallel zu einer Aufstandsfläche der Räder des Fahrzeugs ist.

Entsprechend einer weiteren Ausführungsform der vorliegenden Erfindung kann im Schritt des Vergleichens die Soll-Koordinate aus einem Speicher ausgelesen werden, wobei die Soll-Koordinate in einem vorangegangenen Schritt des Kalibrierens ermittelt wurde und in den Speicher eingespeichert wurde. Ein Kalibrieren kann beispielsweise eine Leuchtweitenregulierung unter kontrollierten Umgebungsbedingungen, wie auf einer Teststrecke oder ein einem Labor sein. Dadurch kann beispielsweise für einen bestimmten Scheinwerfertyp ein Kalibrierungsdurchlauf durchgeführt werden, und die gewonnene Soll-Koordinate vorteilhaft in vielen anderen Scheinwerfern des gleichen Typs zur Leuchtweitenregulierung verwendet werden. Die Lichtverteilung kann auch über eine Simulation am Rechner geschätzt werden und z.B. initial auf die Kamera für den Vergleich übertragen werden.

Ferner kann das Verfahren einem Schritt des Änderns der Soll-Koordinate umfassen, wobei die Soll-Koordinate mittels eines Lernalgorithmus an einen veränderlichen Parameter angepasst wird. Bei einem Austausch eines Scheinwerfer-Leuchtmittels, z.B. nachdem eine Glühlampe durch Defekt ausgefallen ist, ändert sich die anfangs kalibrierte Lichtverteilung. Es ist vorwiegend eine Helligkeitsänderung als Parameter zu erwarten, die sich beim Austausch des Leuchtmittels von nur einem Scheinwerfer in einer leicht veränderten Gesamt-Lichtverteilung auswirken kann. Eine leichte Veränderung des Lichtbildes als Parameter durch eine geringe Positionsänderung der Lichtquelle beim Austausch ist ebenfalls nicht ausgeschlossen. Ebenso ist bei Austausch beider Lichtquellen eine Änderung der Gesamt-Helligkeit als Parameter zu erwarten.
Der Einsatz eines lernenden Verfahrens, das die gespeicherten Soll-Werte mit der Zeit anpasst, kann vorteilhaft eingesetzt werden beispielsweise wenn Leuchtmittel / Lichtquellen ausgetauscht werden.

Die Lichtverteilung kann auch durch Simulationen ermittelt werden, die bei der Produktion auf die hier beschriebene LWR (Leuchtweitenregulierung) bei der Installation/ Parametereinstellung übertragen wird. Ein Kalibrierungs-Durchlauf in einem Labor/ Teststrecke ist dann nicht mehr nötig. Simulation und Realität unterscheiden sich meist leicht. Der Einsatz eines lernenden Verfahrens, das die Simulationsdaten mit der Zeit optimal anpasst, ist dann vorteilhaft.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Signalverarbeitungssystem oder einem Computer ausgeführt wird.

Die Erfindung wird nachstehend anhand der beigefügten Zeichnungen beispielhaft näher erläutert. Es zeigen:
- Fig. 1: eine schematische Darstellung eines Fahrzeugs mit einem Lichtsteuergerät gemäß einem Ausführungsbeispiel der vorliegenden Erfindung;
- Fig. 2: ein Ablaufdiagramm eines Verfahrens zur Leuchtweitenregulierung zumindest eines Scheinwerfers gemäß einem Ausführungsbeispiel der vorliegenden Erfindung;
- Fig. 3a bis 3c: Darstellungen verschiedener Ausführungsbeispiele von Leuchtweitenregulierungen; und
- Fig. 4a und 4b: Darstellungen von Anwendungsfällen eines Verfahrens zur Leuchtweitenregulierung zumindest eines Scheinwerfers gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

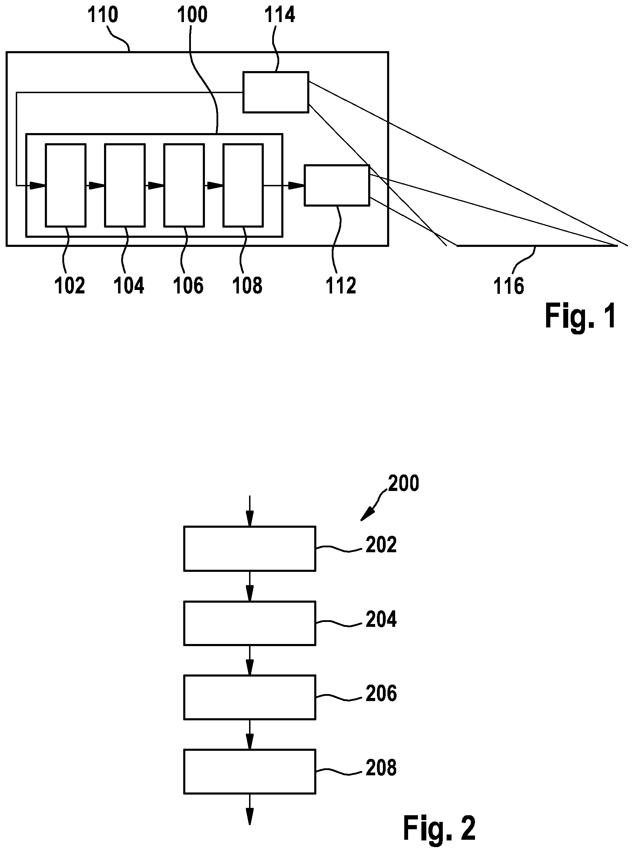

Fig. 1 zeigt eine Darstellung eines Lichtsteuergeräts 100 gemäß einem Ausführungsbeispiel der vorliegenden Erfindung, mit einer Einrichtung zum Einlesen 102, einer Einrichtung zum Bestimmen 104, einer Einrichtung zum Vergleichen 106, sowie einer Einrichtung zum Ansteuern 108. Das Lichtsteuergerät 100 ist in einem Fahrzeug 110 verbaut, das zumindest einen Scheinwerfer 112, sowie zumindest eine Kamera 114 aufweist. Der Scheinwerfer 112 ist ausgebildet, um einen Lichtkegel auf eine Projektionsfläche 116 vor dem Fahrzeug 110 zu projizieren. Die Kamera 114 weist einen Erfassungsbereich auf, der zumindest die Projektionsfläche 116 umfasst. Die Kamera 114 ist ausgebildet, um ein Kamerabild zur Verfügung zu stellen, das den Erfassungsbereich der Kamera in Bildpunkten abbildet. Die Einrichtung zum Einlesen 102 ist ausgebildet, um das Kamerabild von der Kamera 114 einzulesen. Das Kamerabild umfasst zumindest einen Teil eines Abbilds der Projektionsfläche 116 des Lichtkegels des Scheinwerfers 112 vor dem Fahrzeug 110. Die Einrichtung zum Bestimmen 104 ist ausgebildet, um zumindest eine Koordinate zumindest eines vordefinierten Helligkeitsübergangs und alternativ oder ergänzend einer vordefinierten Helligkeitsverteilung in dem Kamerabild zu bestimmen. Die Einrichtung zum Vergleichen 106 ist ausgebildet, um die Koordinate mit einer Soll-Koordinate zu vergleichen, um eine Differenz oder Abweichung der Koordinate von der Soll-Koordinate zu erhalten. Die Einrichtung zum Ansteuern 108 ist ausgebildet, um den Scheinwerfer 112 mit einem von der Differenz abhängigen Leuchtweitenänderungssignal anzusteuern, um die Leuchtweite zu ändern, insbesondere bis die Abweichung kleiner als ein Toleranzwert ist.

Fig. 2 zeigt ein Ablaufdiagramm eines Verfahrens 200 zur Leuchtweitenregulierung zumindest eines Scheinwerfers eines Fahrzeugs gemäß einem Ausführungsbeispiel der vorliegenden Erfindung. Das Verfahren 200 weist einen Schritt des Einlesens 202, einen Schritt des Bestimmens 204, einen Schritt des Vergleichens 206, sowie einen Schritt des Ansteuerns 208 auf. Das Verfahren 200 kann auf einem Steuergerät ausgeführt werden. Im Schritt des Einlesens 202 wird ein Kamerabild einer Kamera des Fahrzeugs eingelesenen. Das Kamerabild umfasst zumindest ein Abbild einer Projektionsfläche eines Lichtkegels eines Scheinwerfers des Fahrzeugs vor dem Fahrzeug. Im Schritt des Bestimmens 204 wird zumindest eine Koordinate zumindest eines vordefinierten Helligkeitsübergangs oder alternativ bzw. ergänzend einer vordefinierten Helligkeitsverteilung in dem Kamerabild bestimmt. Im Schritt des Vergleichens 206 wird die Koordinate mit einer Sollkoordinate verglichen, um eine Differenz oder Abweichung der Koordinate von der Sollkoordinate zu erhalten. Im Schritt des Ansteuerns 208 wird der Scheinwerfer mit einem von der Differenz abhängigen Leuchtweitenänderungssignal angesteuert, um die Leuchtweite zu ändern, insbesondere bis die Abweichung kleiner als ein Toleranzwert ist.

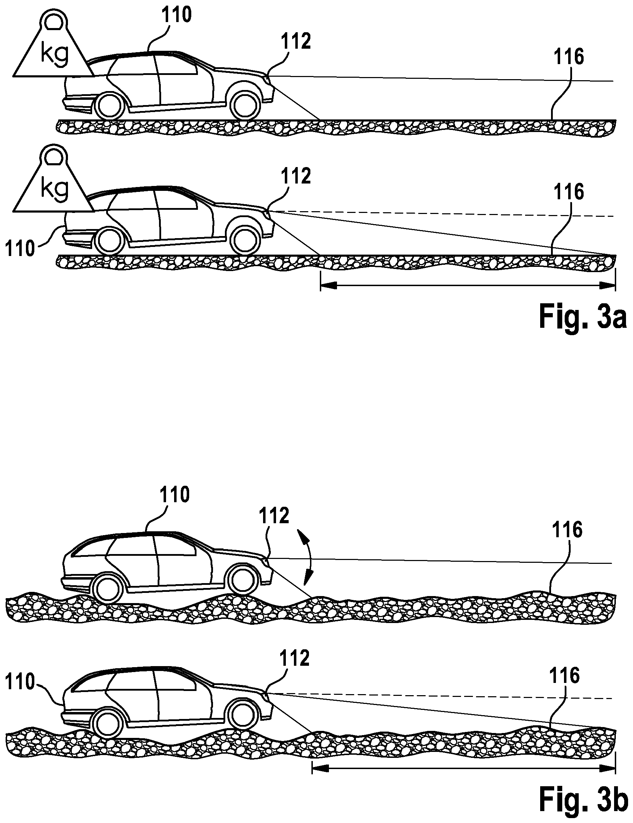

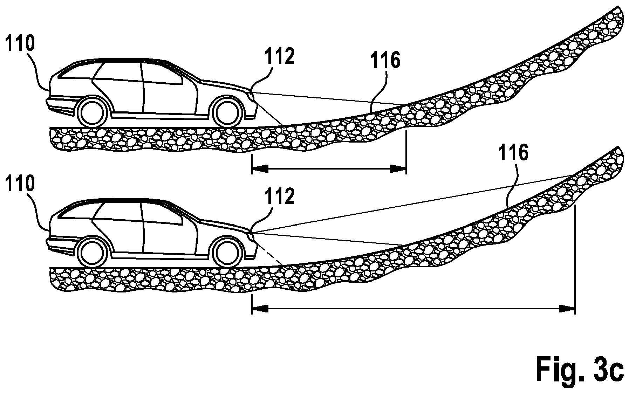

Die Figuren 3a, 3b und 3c zeigen jeweils übereinander angeordnet eine Darstellung zweier Fahrzeuge 110 mit je zumindest einem Scheinwerfer 112. Ein oberes der Fahrzeuge 110 weist jeweils keine Leuchtweitenregulierung auf. Ein unteres der Fahrzeuge 110 ist jeweils mit einer Leuchtweitenregulierung ausgestattet. Die Scheinwerfer 112 der Fahrzeuge 110 emittieren je einen Lichtkegel auf je einer Projektionsfläche 116 vor dem Fahrzeug. Die Leuchtweitenregulierung im jeweils unteren Fahrzeug 110 regelt eine Leuchtweite des Scheinwerfers 112 auf einen vorschriftgemäßen Maximalwert für die Leuchtweite, in diesem Ausführungsbeispiel 65 m.

In Fig. 3a weist das untere Fahrzeug 110 eine statische Leuchtweitenregulierung auf. Beide Fahrzeuge 110 sind im Bereich einer Hinterachse des Fahrzeugs 110 schwer beladen. Eine Beladung wird durch ein Gewichtssymbol repräsentiert. Durch die Beladung sind die Fahrzeuge 110 schräg zu einer Aufstandsfläche der Fahrzeuge 110 ausgerichtet oder verkippt. Ein vorderes Ende der Fahrzeuge 110 ist weiter von der Aufstandsfläche entfernt, als ein hinteres Ende der Fahrzeuge 110. An dem vorderen Ende befindet sich der Scheinwerfer 112 und an dem hinteren Ende befindet sich die Beladung. Beim oberen Fahrzeug 110 weist der Scheinwerfer 112 eine Leuchtweite auf, die größer als der vorgeschriebene Maximalwert ist, da das Fahrzeug schräg ausgerichtet ist. Beim unteren Fahrzeug 110 ist der Scheinwerfer 112 durch die statische Leuchtweitenregulierung in Richtung auf die Aufstandsfläche gedreht, so dass die Projektionsfläche 116 nur bis zu dem vorschriftsgemäßen Maximalwert reicht.

In Fig. 3b weist das untere Fahrzeug 110 eine dynamische Leuchtweitenregulierung auf. Beide Fahrzeuge 110 fahren über eine unebene Aufstandsfläche. Daher ändert sich die Leuchtweite der Scheinwerfer 112 entsprechend einer resultierenden Nickbewegung der Fahrzeuge 110. Beim oberen Fahrzeug ist eine Veränderung der Leuchtweite durch einen doppelseitigen Pfeil im Lichtkegel angedeutet. Die dynamische Leuchtweitenregulierung im unteren Fahrzeug 110 stabilisiert den Scheinwerfer, so dass der vorschriftsgemäße Maximalwert für die Leuchtweite trotz der Nickbewegung des Fahrzeugs 110 eingehalten wird.

In Fig. 3c weist das untere Fahrzeug 110 eine erweiterte Leuchtweitenregulierung auf. Beide Fahrzeuge 110 stehen auf einer ebenen Aufstandsfläche. Vor beiden Fahrzeugen befindet sich eine ansteigende Fläche. Beim oberen Fahrzeug 110 ohne erweiterte Leuchtweitenregulierung wird die Projektionsfläche 116 durch die ansteigende Fläche vor dem Fahrzeug 110 verkürzt. Die Leuchtweite wird dadurch kleiner, als der vorschriftsgemäße Maximalwert. Im unteren Fahrzeug 110 mit der Leuchtweitenregulierung wird die ansteigende Fläche erkannt und der Scheinwerferkegel des Scheinwerfers 112 von einer Ebene der Aufstandsfläche nach oben geschwenkt, bis die Leuchtweite auf der ansteigenden Ebene den vorschriftsgemäßen Maximalwert erreicht. Die Projektionsfläche 116 befindet sich dann auf der ansteigenden Fläche oberhalb des Fahrzeugs 110.

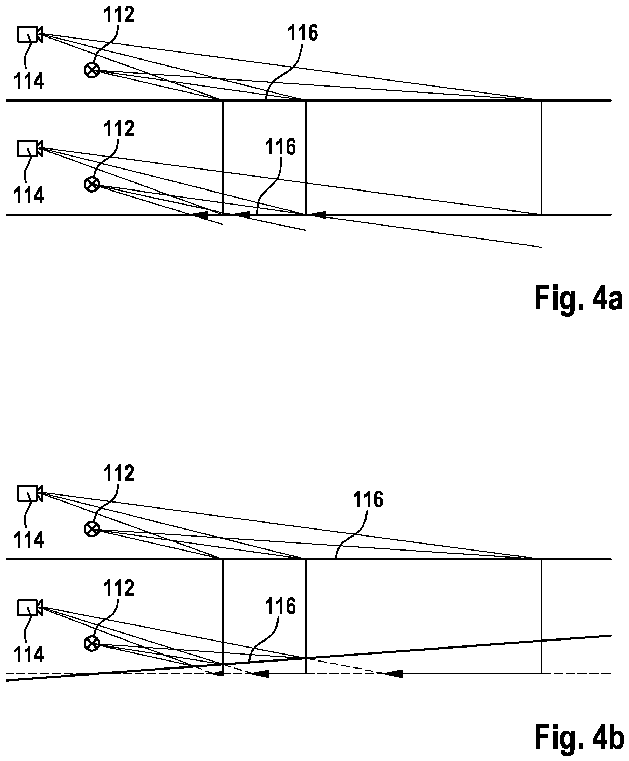

Die Figuren 4a und 4b zeigen eine Prinzipdarstellung einer Erkennung einer verkürzten Leuchtweite in einem Kamerabild gemäß einem Ausführungsbeispiel der vorliegenden Erfindung. Ein nicht abgebildetes Fahrzeug weist zumindest einen Scheinwerfer 112 und eine Kamera 114 auf. Der Scheinwerfer 112 erleuchtet mit einem Scheinwerferstrahl eine Fläche vor dem Fahrzeug. Der Scheinwerferstrahl wird auf der Fläche als Projektionsfläche 116 abgebildet. Aufgrund eines schrägen Einfallwinkels des Lichtstrahls auf die Projektionsfläche 116 weist die Projektionsfläche 116 eine Helligkeitsverteilung auf, wobei nahe am Fahrzeug mehr Licht auf die Fläche trifft, als entfernt vom Fahrzeug. Der Scheinwerferstrahl ist durch zwei dargestellte Randstrahlen begrenzt. Repräsentativ für die Helligkeitsverteilung ist im Scheinwerferstrahl ein einzelner Lichtstrahl hervorgehoben, der einen Helligkeitsübergang zwischen einem hell erleuchteten Bereich und einem weniger hell erleuchteten Bereich in der Projektionsfläche 116 repräsentiert. Sowohl in der Fig. 4a, als auch in der Fig. 4b sind zum Vergleich jeweils einen Normalzustand (obere Darstellung) und ein anderer Zustand (untere Darstellung) übereinander dargestellt. Endpunkte der Lichtstrahlen des Scheinwerfers 112 auf der Projektionsfläche 116 im Normalzustand sind durch gestrichelte Linien in die Darstellung des anderen Zustands übertragen, um eine Vergleichbarkeit der zwei übereinander liegenden Darstellungen zu erreichen. Die Kamera 114 empfängt Licht aus einem Erfassungsbereich der Kamera 114 und generiert daraus ein Kamerabild. In dem Erfassungsbereich befindet sich auch die Projektionsfläche 116. Repräsentativ für ein empfangenes Bild der Kamera 114 sind im Normalzustand die Endpunkte der Randstrahlen und des Lichtstrahls durch Sichtlinien mit der Kamera verbunden.

In Fig. 4a unten ist ein anderer Zustand dargestellt, in dem der Scheinwerfer 112 nach unten zur Fläche vor dem Fahrzeug hin verkippt und dekalibriert ist. Dadurch trifft der Scheinwerferstrahl näher vor dem Fahrzeug auf die Aufstandsfläche des Fahrzeugs und die Projektionsfläche 116 ist kleiner als im darüber dargestellten Normalzustand. Eine Hell-Dunkel-Grenze und Inhomogenitäten im Scheinwerferstrahl befinden sich näher am Fahrzeug, wenn der Scheinwerfer 112 dekalibriert ist, oder nach unten blickt. In der Darstellung repräsentieren Pfeile zwischen den Auftreffpunkten der Randstrahlen und des Lichtstrahls im Normalzustand und den Auftreffpunkten der Randstrahlen und des Lichtstrahls im verschobenen Zustand die Verschiebung. Die Kamera 114 erfasst die verkleinerte und verschobene Projektionsfläche 116, sowie die Helligkeitsverteilung oder alternativ bzw. ergänzend den Helligkeitsübergang. In einem nicht dargestellten Lichtsteuergerät wird in einem Verfahren zur Leuchtweitenregulierung des Scheinwerfers 112 gemäß einem Ausführungsbeispiel der vorliegenden Erfindung in einem Schritt des Einlesens das Kamerabild von der Kamera 114 eingelesen. In einem Schritt des Bestimmens wird aus dem Kamerabild eine Koordinate des Helligkeitsübergangs oder alternativ bzw. ergänzend eine Koordinate der Helligkeitsverteilung bestimmt. In einem Schritt des Vergleichens wird die Koordinate mit einer Sollkoordinate verglichen, oder die Helligkeitsverteilung wird mit einer Sollhelligkeitsverteilung verglichen. Aus dem Vergleich wird eine Abweichung bzw. Differenz gewonnen. In einem Schritt des Ansteuerns wird der Scheinwerfer 112 in Abhängigkeit von der Differenz mit einem Leuchtweitenänderungssignal angesteuert, insbesondere bis die Abweichung zwischen der Koordinate und der Sollkoordinate und/oder die Abweichung zwischen der Helligkeitsverteilung und der Sollhelligkeitsverteilung kleiner als ein Toleranzwert ist.

In Fig. 4b unten ist ein weiterer Zustand dargestellt, in denen der Scheinwerfer 112 wie im Normalzustand (Fig. 4b oben) eingestellt ist. Die Fläche vor dem Fahrzeug ist jedoch ansteigend. Dadurch soll beispielsweise eine Kuppe nachgebildet sein. Da die ansteigende Fläche den Scheinwerferstrahl früher schneidet, als im Normalzustand sind die Lichtstrahlen aus dem Scheinwerfer 112 verkürzt. Dadurch ist die Projektionsfläche 116 kleiner und näher am Fahrzeug als im Normalzustand. Die ansteigende Fläche schneidet die Sichtlinien zur Kamera ebenfalls früher als im Normalzustand. Dadurch wirkt die Projektionsfläche 116 im Kamerabild weniger weit zum Fahrzeug verschoben, als dies tatsächlich der Fall ist. Die Kamera 114 nimmt an der Kuppe weiterhin eine ebene Aufstandsfläche an. Durch eine Verschiebung der Projektionsfläche wird angenommen, dass der Scheinwerfer 112 zu weit nach unten zeigt. Wie in Fig. 4a unten kann die Leuchtweite des Scheinwerfers 112 durch ein Verfahren zur Leuchtweitenregulierung gemäß einem Ausführungsbeispiel der vorliegenden Erfindung verändert werden. Da die ansteigende Fläche auch die Sichtlinien verkürzt, wird die tatsächlich erreichte Leuchtweite etwas geringer eingestellt, als im Normalfall. Wenn jedoch die Kuppe vor dem Fahrzeug als ansteigende Fläche erkannt wird (beispielsweise durch eine Auswertung des Höhenverlaufs der Straße), kann die resultierende Verkürzung der Richtlinien kompensiert werden, und die Leuchtweite des Scheinwerfers 112 auf den Wert wie im Normalfall eingestellt werden.

Mit anderen Worten zeigen die Figuren 4a und 4b eine Leuchtweitenregulierung über eine Kamera 114 mit bekanntem Helligkeitsverlauf. Die Sichtweite bei Nacht hängt mit der Helligkeit der Scheinwerfer 112 zusammen. Daher werden immer hellere Scheinwerfersysteme entwickelt, welche die Rahmenbedingungen der gesetzlichen Grenzwerte bereits fast übertreffen. Dies wurde mit Einführung neuer Lichtquellen im Scheinwerfer 112 möglich: "Xenon-Scheinwerfer" (Scheinwerfer mit einer Hochdruck-Gasentladungs-Lichtquelle) weisen im Allgemeinen einen höheren Lichtstrom als "Halogen-Scheinwerfer" (Scheinwerfer mit einer Glühlampe als Lichtquelle) auf und sind damit deutlich heller. Wenn Scheinwerfer 112 einen gewissen Lichtstrom (Helligkeit) überschreiten, müssen sie mit einer automatischen Leuchtweitenregulierung und einer Scheinwerfer-Waschanlage ausgerüstet sein. Durch Streulicht an verdreckten Scheinwerfern 112 könnte Blendung entstehen. Die zusätzlichen Systeme erhöhen die Systemkosten deutlich, wodurch in Fahrzeugen aus der mittleren oder unteren Klasse weniger Scheinwerfer 112 mit einem hohen Lichtstrom verbaut werden. Die Lichtqualität und/oder Lichtstärke wirkt sich unmittelbar auf die Sichtweite und damit die Unfallgefahr aus.

Viele Fahrzeuge, die keine automatische Leuchtweitenregulierung (LWR) verbaut haben, nehmen mit falsch eingestellten Scheinwerfern am Straßenverkehr teil. Dies hat eine kürzere Sichtweite für den Fahrer oder eine Blendung anderer Verkehrsteilnehmer zur Folge. Es wäre daher vorteilhaft, wenn in Zukunft für alle Scheinwerfertypen eine automatische LWR (LWR = Leuchtweiteregulierung) vorgesehen wäre. Kostengünstige Lösungen sind daher für alle Fahrzeuge wichtig.

Die Leuchtweitenregulierung (LWR) gibt es in verschiedenen Ausführungsvarianten, wie in Fig. 3a bis 3c dargestellt. Es gibt einen einfachen Lastausgleich, der die Scheinwerfer 112 bei Beladung so einstellt, dass die Reichweite konstant bleibt. Bei einer dynamischen LWR wird in Abhängigkeit der aktuellen Nickbewegung des Fahrzeugs 110 versucht die Scheinwerfer 112 auf eine konstante Leuchtweite einzustellen. In einer erweiterten Leuchtweitenregulierung "ALC" (Adaptive Low Beam Control) werden die Scheinwerfer 112 so eingestellt, dass sie vorausschauend einen Topographie-Ausgleich vornehmen, z.B. den Lichtkegel vor einer Kuppe anheben.

Für eine statische LWR, wie in Fig. 3a ist zum Lastausgleich mindestens ein Höhenstands-Sensor an einer Achse nötig. Für eine dynamische oder erweiterte LWR, wie in Fig. 3b und 3c sind mindestens zwei Sensoren nötig. Mit einem Kamerasystem 114, wie es für Fernlichtassistenten, Spurhalteassistenten und Verkehrszeichenerkennung eingesetzt wird, kann man den Höhenverlauf vorausschauend erkennen. Damit kann eine erweiterte LWR realisiert werden. Über einen Nickratensensor kann ebenfalls eine dynamische LWR realisiert werden. Die Nickrate kann auch aus dem Bild geschätzt werden.

Die Achssensoren oder Höhenstandssensorik, die auch für den Lastausgleich genutzt werden, erhöhen die Systemkosten. Durch Nutzung einer schon eingebauten Kamera 114 und einer bekannten Scheinwerfer-Ausleuchtung können die Systemkosten reduziert werden und der Anteil an manuellen LWRs, die häufig falsch eingestellt sind, reduziert werden.

In Fig. 4a und Fig. 4b nimmt die Kamera 114 ein Bild vor dem Fahrzeug 110 auf, wobei das Bild von dem Scheinwerfer 112 beleuchtet wird. Das Kamera-Steuergerät 100 kennt die optimale oder richtige Scheinwerfer-Lichtverteilung anhand einer Hell-Dunkel-Grenze und bekannten Inhomogenitäten innerhalb der Lichtverteilung, beispielsweise aus Kalibrier-Messungen oder z.B. Simulationsergebnissen bei der Scheinwerferauslegung. Die "Soll-Lichtverteilung" liegt als A-Priori-Wissen vor der Leuchtweitenregulierung im Speicher des Kamerasystems vor. Zusätzlich kann durch ein lernendes Verfahren eine Anpassung nach einem Leuchtmittelwechsel z.B. an eine geänderte Helligkeit vorteilhaft eingesetzt werden. Wenn (vor allem bei Halogen-Lampen) ein Leuchtmittel getauscht wird, kann die Glühwendel an einer geringfügig anderen Stelle sitzen, was wiederum ein leicht geändertes Abbild des Scheinwerferkegels auf der Straße zur Folge hat. Wenn das lernende Verfahren nur sehr langsame und träge Anpassungen vornimmt, kann über die Zeit ein Tausch der Birne erkannt werden und die interne Repräsentation angepasst werden

Durch den Versatz von Kamera 114 und Scheinwerfer 112 kann das Kamera-Steuergerät 100 Abweichungen in der Leuchtweite ermitteln. Inhomogenitäten und die Hell-Dunkel-Grenze liegen dann nicht an den ursprünglichen Punkten.

Das Kamera-Steuergerät 100 kann dem Scheinwerfer 112 für eine Initialisierung vorgeben, dass er während der Messung der Lichtstrahl und damit die Lichtverteilung um einen relativen Abstrahlwinkel absenkt, um eine andere Ausleuchtung der Szene bzw. schärfere Projektion 116 der Hell-Dunkel-Grenze auf der Straße zu erhalten. Dadurch könnten Topographieunterschiede und/oder Unterschiede im Reflexionsgrad der Straße beispielsweise bedingt durch eine Farbe des Bodens besser herausgerechnet werden.

Die Messung der Scheinwerfer-Lichtverteilung kann beispielsweise zu Beginn der Fahrt durchgeführt werden, wenn bei vielen Scheinwerfersystemen 112 ein Kalibrierungslauf der Schrittmotoren erfolgt. Durch eine Messung oder Schätzung des Reflexionsgrades kann die Vermessung der Scheinwerfer-Lichtverteilung, aus der die Kalibrierung geschätzt wird, verbessert werden.

Die Schätzung der De-Kalibrierung der Scheinwerfer 112 wird durch eine nicht ebene Topographie erschwert. Die Hell-Dunkel-Grenze und Scheinwerfer-Inhomogenitäten werden dann an eine andere Stelle als erwartet projiziert.

Durch Nutzung der Ergebnisse einer Oberflächenschätzung gegebenenfalls nach Abfahren einer Scheinwerfer-Messstrecke, beispielsweise 65 m, kann die erwartete Lichtverteilung berechnet werden und die Scheinwerfer 112 angepasst werden.

Die Leuchtweitenregulierung zum Lastausgleich oder statische LWR kann um eine dynamische LWR und/oder erweiterte LWR ergänzt werden, wenn der Abstrahlwinkel relativ zur Oberfläche kontinuierlich während der Fahrt bestimmt wird.

Bei Austausch des Leuchtmittels sind vorwiegend Änderungen der Lichthelligkeit zu erwarten. Vorteilhaft wirkt sich hier ein träges lernendes Verfahren aus, bei dem das gespeicherte A-Priori-Wissen bzw. die gespeicherte Lichtverteilung langsam angepasst werden und so die Leistungsfähigkeit des Verfahrens nochmals erhöht wird.

Ebenso kann ungenaues A-Priori-Wissen durch ein lernendes Verfahren verbessert werden. Dies ist beispielsweise vorteilhaft, wenn man Simulationsdaten als Soll-Größen verwendet oder eine Kalibrierung der Soll-Größen einmalig für jedes Modell (nicht für jedes Fahrzeug) durchführt, bei dem die fahrzeugspezifischen Abweichungen nicht berücksichtigt werden können.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zur Leuchtweitenregulierung zumindest eines Scheinwerfers (112) eines Fahrzeugs (110), mit folgenden Schritten:
Einlesen (202) eines Kamerabilds zumindest einer Kamera (114) des Fahrzeugs (110), wobei das Kamerabild zumindest einen Teil eines Abbilds einer Projektionsfläche (116) eines Lichtkegels des Scheinwerfers (112) vor dem Fahrzeug (110) umfasst;
Bestimmen (204) zumindest einer Koordinate zumindest eines vordefinierten Helligkeitsübergangs und/oder einer vordefinierten Helligkeitsinhomogenität in dem Kamerabild;
Vergleichen (206) der Koordinate mit einer Soll-Koordinate, um eine Differenz der Koordinate von der Soll-Koordinate zu erhalten, wobei die Soll-Koordinate eine Koordinate repräsentiert, an der der vordefinierte Helligkeitsübergang oder die vordefinierte Helligkeitsinhomogenität erwartet wird; und
Ansteuern (208) des Scheinwerfers (112) mit einem von der Differenz abhängigen Leuchtweitenänderungssignal, um die Leuchtweite zu ändern,
**dadurch gekennzeichnet, dass**
vor dem Schritt des Einlesens ein Schritt des Initialisierens des Scheinwerfers (112) ausgeführt wird, wobei der Scheinwerfer (112) im Schritt des Initialisierens mit einem Initialisierungssignal angesteuert wird, um die Projektionsfläche (116) zu ändern, insbesondere zu verkleinern.

2. Verfahren (200) gemäß Anspruch 1, bei dem im Schritt des Bestimmens (204) ferner zumindest ein Teil eines Umrisses der Projektionsfläche (116) bestimmt wird, und im Schritt des Vergleichens (206) ferner der Umriss mit einem Soll-Umriss verglichen wird, um die Differenz zu erhalten.

3. Verfahren (200) gemäß einem der vorangegangenen Ansprüche, mit einem Schritt des Ermittelns einer Reflektivität einer Fahrbahn vor dem Fahrzeug (110) aus der Bildinformation, wobei im Schritt des Bestimmens (204) die Koordinate unter Verwendung der Reflektivität bestimmt wird.

4. Verfahren (200) gemäß einem der vorangegangenen Ansprüche, bei dem im Schritt des Bestimmens (204) ein Höhenverlauf einer Straße durch ein Befahren der Straße mit dem Fahrzeug (110) bestimmt wird, und im Schritt des Vergleichens (206) die Differenz unter Berücksichtigung des Höhenverlaufs bestimmt wird.

5. Verfahren (200) gemäß einem der vorangegangenen Ansprüche, bei dem im Schritt des Bestimmens (204) ansprechend auf ein Erkennen einer Bodenunebenheit vor dem Fahrzeug (110) ein Unebenheitsverlauf vor dem Fahrzeug (110) geschätzt wird, und im Schritt des Vergleichens (206) die Soll-Koordinate entsprechend dem Unebenheitsverlauf angepasst wird.

6. Verfahren (200) gemäß einem der vorangegangenen Ansprüche, bei dem im Schritt des Vergleichens (206) die Soll-Koordinate aus einem Speicher ausgelesen wird, wobei die Soll-Koordinate in einem vorangegangenen Schritt des Kalibrierens ermittelt wird und in den Speicher eingespeichert wurde.

7. Verfahren (200) gemäß einem der vorangegangenen Ansprüche, mit einem Schritt des Änderns der Soll-Koordinate, wobei die Soll-Koordinate mittels eines Lernalgorithmus an einen veränderlichen Parameter angepasst wird.

8. Lichtsteuergerät (100) zur Leuchtweitenregulierung zumindest eines Scheinwerfers (112) eines Fahrzeugs (110) mit folgenden Merkmalen:
eine Einrichtung zum Einlesen (102) eines Kamerabilds zumindest einer Kamera (114) des Fahrzeugs (110), wobei das Kamerabild zumindest einen Teil eines Abbilds einer Projektionsfläche (116) eines Lichtkegels des Scheinwerfers (112) vor dem Fahrzeug (110) umfasst;
eine Einrichtung zum Bestimmen (104) zumindest einer Koordinate zumindest eines vordefinierten Helligkeitsübergangs und/oder einer vordefinierten Helligkeitsinhomogenität in dem Kamerabild;
eine Einrichtung zum Vergleichen (106) der Koordinate mit einer Soll-Koordinate, um eine Differenz der Koordinate von der Soll-Koordinate zu erhalten, wobei die Soll-Koordinate eine Koordinate repräsentiert, an der der vordefinierte Helligkeitsübergang oder die vordefinierte Helligkeitsinhomogenität erwartet wird; und
eine Einrichtung zum Ansteuern (108) des Scheinwerfers (112) mit einem von der Differenz abhängigen Leuchtweitenänderungssignal,
**dadurch gekennzeichnet, dass**
Eine Einheit zum Initialisieren vorgesehen ist, die ausgebildet ist, um vor dem Schritt des Einlesens das Initialisieren des Scheinwerfers (112) auszuführen, wobei der Scheinwerfer (112) beim Initialisierens mit einem Initialisierungssignal angesteuert wird, um die Projektionsfläche (116) zu ändern, insbesondere zu verkleinern.

9. Computer-Programmprodukt mit Programmcode zur Durchführung des Verfahrens nach einem der Ansprüche 1 bis 7, wenn das Programm auf einem Signalverarbeitungssystem ausgeführt wird.

## Claims

1. Method (200) for regulating the headlight range of at least one headlamp (112) of a vehicle (110), including the following steps:
reading (202) a camera image from at least one camera (114) of the vehicle (110), wherein the camera image comprises at least part of an image of a projection surface (116) of a light cone of the headlamp (112) in front of the vehicle (110);
determining (204) at least one coordinate of at least one predefined brightness transition and/or a predefined brightness inhomogeneity in the camera image;
comparing (206) the coordinate to a setpoint coordinate in order to obtain difference between the coordinate and the setpoint coordinate, the setpoint coordinate representing a coordinate at which the predefined brightness transition or the predefined brightness inhomogeneity is expected; and
actuating (208) the headlamp (112) with a headlight range modification signal, which depends on the difference, in order to change the headlight range,
**characterized in that,**
prior to the reading step, a step of initializing the headlamp (112) is implemented, wherein the headlamp (112) is actuated by an initialization signal in the initialization step in order to modify, in particular reduce, the projection surface (116).

2. Method (200) according to Claim 1, wherein, in the determining step (204), at least a part of an outline of the projection surface (116) is further determined and, in the comparing step (206), the outline is further compared to a setpoint outline in order to obtain the difference.

3. Method (200) according to either of the preceding claims, comprising a step of establishing a reflectivity of a roadway in front of the vehicle (110) from the image information, the coordinate being determined in the determining step (204) using the reflectivity.

4. Method (200) according to any one of the preceding claims, wherein, in the determining step (204), an elevation profile of road is determined by travelling along the road with the vehicle (110) and, in the comparing step (206), the difference is determined taking into account the elevation profile.

5. Method (200) according to any one of the preceding claims, wherein, in the determining step (204), an unevenness profile in front of the vehicle (110) is estimated in response to an identification of a ground unevenness in front of the vehicle (110) and, in the comparing step (206), the setpoint coordinate is adapted in accordance with the unevenness profile.

6. Method (200) according to any one of the preceding claims, wherein, in the comparing step (206), the setpoint coordinate is read from memory, wherein the setpoint coordinate was established in a preceding calibration step and stored in the memory.

7. Method (200) according to any one of the preceding claims, comprising step of changing the setpoint coordinate, wherein the setpoint coordinate is adapted to a modifiable parameter by means of a learning algorithm.

8. Light controller (100) for regulating the headlight range of at least one headlamp (112) of vehicle (110), comprising the following features:
a device for reading (102) a camera image from at least one camera (114) of the vehicle (110), wherein the camera image comprises at least part of an image of a projection surface (116) of a light cone of the headlamp (112) in front of the vehicle (110);
a device for determining (104) at least one coordinate of at least one predefined brightness transition and/or a predefined brightness inhomogeneity in the camera image;
a device for comparing (106) the coordinate to a setpoint coordinate in order to obtain difference between the coordinate and the setpoint coordinate, the setpoint coordinate representing a coordinate at which the predefined brightness transition or the predefined brightness inhomogeneity is expected; and
a device for actuating (108) the headlamp (112) with a headlight range modification signal, which depends on the difference,
**characterized in that,**
provision is made of a unit for initialization, embodied to implement an initialization of the headlamp (112) prior to the reading step, wherein the headlamp (112) is actuated by an initialization signal during the initialization in order to modify, in particular reduce, the projection surface (116).

9. Computer program product having program code for carrying out the method according to any one of Claims 1 to 7 when the program is executed on a signal processing system.

## Revendications

1. Procédé (200) de régulation de la portée d'éclairement d'au moins un phare (112) d'un véhicule (110), comprenant les étapes suivantes :
chargement (202) d'une image de caméra d'au moins une caméra (114) du véhicule (110), l'image de caméra comportant au moins une partie d'une représentation d'une surface de projection (116) d'un cône lumineux du phare (112) devant le véhicule (110) ;
détermination (204) d'au moins une coordonnée d'au moins une transition de luminosité prédéfinie et/ou d'un défaut d'homogénéité prédéfini dans l'image de caméra ;
comparaison (206) de la coordonnée à une coordonnée de consigne afin d'obtenir une différence de coordonnée par rapport à la coordonnée de consigne, la coordonnée de consigne représentant une coordonnée à laquelle est attendue la transition de luminosité prédéfinie ou le défaut d'homogénéité prédéfini ; et
commande (208) du phare (112) avec un signal de modification de la portée d'éclairement dépendant de la différence afin de modifier la portée d'éclairement,
**caractérisé en ce que**
une étape d'initialisation du phare (112) est exécutée avant l'étape de chargement, le phare (112) étant commandé dans l'étape d'initialisation avec un signal d'initialisation afin de modifier, notamment de réduire, la surface de projection (116).

2. Procédé (200) selon la revendication 1, selon lequel, dans l'étape de détermination (204), au moins une partie d'un contour de la surface de projection (116) est en plus déterminée, et dans l'étape de comparaison (206), le contour est en plus comparé à un contour de consigne afin d'obtenir la différence.

3. Procédé (200) selon l'une des revendications précédentes, comprenant une étape de détermination d'une réflectivité d'une voie de circulation devant le véhicule (110) à partir de l'information d'image, à l'étape de détermination (204), la coordonnée étant déterminée en utilisant la réflectivité.

4. Procédé (200) selon l'une des revendications précédentes, selon lequel, à l'étape de détermination (204), un tracé de hauteur d'une route étant déterminé par une circulation sur la route avec le véhicule (110), et, à l'étape de comparaison (206), la différence étant déterminée en tenant compte du tracé de hauteur.

5. Procédé (200) selon l'une des revendications précédentes, selon lequel, à l'étape de détermination (204), en réaction à la reconnaissance d'une irrégularité du sol devant le véhicule (110), un tracé d'irrégularité devant le véhicule (110) étant estimé et, à l'étape de comparaison (206), la coordonnée de consigne étant adaptée en fonction du tracé d'irrégularité.

6. Procédé (200) selon l'une des revendications précédentes, selon lequel, à l'étape de comparaison (206), la coordonnée de consigne est lue depuis une mémoire, la coordonnée de consigne étant déterminée dans une étape d'étalonnage précédente et ayant été enregistrée dans la mémoire.

7. Procédé (200) selon l'une des revendications précédentes, comprenant une étape de modification de la coordonnée de consigne, la coordonnée de consigne étant adaptée à un paramètre variable au moyen d'un algorithme d'apprentissage.

8. Contrôleur d'éclairage (100) destiné à la régulation de la portée d'éclairement d'au moins un phare (112) d'un véhicule (110), possédant les caractéristiques suivantes :
un dispositif pour charger (102) une image de caméra d'au moins une caméra (114) du véhicule (110), l'image de caméra comportant au moins une partie d'une représentation d'une surface de projection (116) d'un cône lumineux du phare (112) devant le véhicule (110) ;
un dispositif pour déterminer (104) au moins une coordonnée d'au moins une transition de luminosité prédéfinie et/ou un défaut d'homogénéité prédéfini dans l'image de caméra ;
un dispositif pour comparer (106) la coordonnée à une coordonnée de consigne afin d'obtenir une différence de coordonnée par rapport à la coordonnée de consigne, la coordonnée de consigne représentant une coordonnée à laquelle est attendue la transition de luminosité prédéfinie ou le défaut d'homogénéité prédéfini ; et
un dispositif pour commander (108) le phare (112) avec un signal de modification de la portée d'éclairement dépendant de la différence,
**caractérisé en ce que**
une unité servant à l'initialisation est présente pour effectuer l'initialisation du phare (112) avant l'étape de chargement, le phare (112) étant commandé lors de l'initialisation avec un signal d'initialisation afin de modifier, notamment de réduire, la surface de projection (116) .

9. Produit de programme informatique comprenant un code de programme servant à mettre en oeuvre le procédé selon l'une des revendications 1 à 7 lorsque le programme est exécuté sur un système de traitement de signal.
